# EUROPEAN PATENT APPLICATION

(11) **EP 4 632 599 A1**
(43) Date of publication of application: **15.10.2025**
(21) Application number: 23899822.3
(22) Date of filing: 27.11.2023
(51) Int. Cl.: G06F 16/332, G06F 16/36

(54) **MAN-MACHINE CONVERSATION AND PRE-TRAINING LANGUAGE MODEL TRAINING METHODS AND SYSTEMS AND ELECTRONIC DEVICE**

(30) Priority: 08.12.2022 CN 202211571108
(71) Applicant: Alibaba Innovation Private Limited, Singapore 189554 (SG)
(72) Inventor: LI, Yongbin, Beijing 100102 (CN); YU, Haiyang, Beijing 100102 (CN); YU, Bowen, Beijing 100102 (CN); LI, Jingyang, Beijing 100102 (CN); HUANG, Fei, Bellevue (US)
(74) Representative: Barker Brettell LLP
(86) International application number: PCT/CN2023/134444
(87) International publication number: WO 2024/120243

(57) **Abstract**

Embodiments of the present application provide a man-machine dialog method, a training method of a pre-trained language model, a system, and an electronic device. The man-machine dialog system includes: a question-answer engine module and a document knowledge graph module; the question-answer engine module is configured to: convert a question of a user into a corresponding question vector; and compare the question vector with feature representations corresponding to a plurality of document nodes in a document knowledge graph stored by the document knowledge graph module, to determine, from the plurality of the document nodes, a target document node that is matched with the question vector, where the document knowledge graph is generated based on hierarchical structure information and content information of a plurality of documents; and generate an answer for the question according to node content corresponding to the target document node that is matched with the question vector; the document knowledge graph module is configured to: store the document knowledge graph, and provide access to the document knowledge graph. According to the embodiments of the present application, the accuracy of question-answer interaction is improved.

## Description

The present application claims priority to Chinese Patent Application No. 202211571108.7, filed on December 08, 2022 to the China National Intellectual Property Administration and entitled "MAN-MACHINE DIALOG METHOD, TRAINING METHOD OF PRE-TRAINED LANGUAGE MODEL, SYSTEM, AND ELECTRONIC DEVICE", which is incorporated herein by reference in its entirety.

### TECHNICAL FIELD

Embodiments of the present application relate to the field of artificial intelligence technology and, in particular, to a man-machine dialog method, a training method of a pre-trained language model, a man-machine dialog system, and an electronic device.

### BACKGROUND

Man-machine dialog is a new type of interaction between humans and machines, which aims at enabling machines to understand and use human natural language to achieve communications between humans and machines, so that machines can replace some of human mental labor and play a role in extending human brains. And man-machine dialog interaction based on machine reading comprehension (Machine Reading Comprehension, MRC) is an important branch of it.

Machine reading comprehension is a technology utilizing algorithms to enable a computer to understand the semantics of a document and answer questions related to the document. At present, man-machine dialog based on machine reading comprehension is mostly achieved through machine reading comprehension technology, according to which a fragment is extracted from a document as an answer for a user's question. However, in a practical application, the answer is mainly generated based on the keyword(s), for example, one or more fragments of contents will be retrieved from the document based on the keyword(s) in the question, and the answer will be generated based on these contents. However, on the one hand, the retrieved contents may not be a valid answer; on the other hand, if multiple fragments of contents are combined to generate an answer, the answer might be incomprehensible due to existence of serious grammar problems.

It can be seen that in the existing manner of man-machine dialog interaction based on machine reading comprehension, since generation of the answer is uncontrollable, irrelevant or incomprehensible fragments would be easily generated, resulting in low efficiency of man-machine dialog.

### SUMMARY

In view of above, embodiments of the present application provide a man-machine dialog solution, to solve at least part of the above-mentioned problems.

According to a first aspect of the embodiments of the present application, a man-machine dialog method is provided, including: obtaining a question vector corresponding to a question; determining, from a plurality of document nodes, a target document node that is matched with the question vector, according to feature representations corresponding to the plurality of document nodes in a pre-generated document knowledge graph, where the document knowledge graph is generated based on hierarchical structure information and content information of a plurality of documents; and generating an answer for the question according to node content corresponding to the target document node that is matched with the question vector.

According to a second aspect of the embodiments of the present application, a training method of a pre-trained language model is provided, including: acquiring a training sample set, where the training sample set includes different types of training samples that are used to perform training on the pre-trained language model for different tasks; and performing multi-task joint training on the pre-trained language model based on the different types of training samples, to obtain a model that is capable of outputting data used for generating a document data unit, where the document data unit is used to construct a document knowledge graph with hierarchical structure information.

According to a third aspect of the embodiments of the present application, another man-machine dialog method is provided, including: receiving, through an interaction interface, a question input by a user, generating a question request according to the question and sending the question request to a could server; and receiving answer content fed back from the cloud server for the question request, and exhibiting and displaying the answer content; where the answer content is generated by the could server according to a document knowledge graph and the question corresponding to the question request, and the document knowledge graph is generated based on hierarchical structure information and content information of a plurality of documents.

According to a fourth aspect of the embodiments of the present application, a man-machine dialog system is provided, including: a question-answer engine module and a document knowledge graph module; the question-answer engine module is configured to: convert a question of a user into a corresponding question vector; and compare the question vector with feature representations corresponding to a plurality of document nodes in a document knowledge graph stored by the document knowledge graph module, to determine, from the plurality of the document nodes, a target document node that is matched with the question vector, where the document knowledge graph is generated based on hierarchical structure information and content information of a plurality of documents; and generate an answer for the question according to node content corresponding to the target document node that is matched with the question vector; the document knowledge graph module is configured to: store the document knowledge graph, and provide access to the document knowledge graph.

According to a fifth aspect of the embodiments of the present application, an electronic device is provided, including: a processor, a memory, a communications interface and a communication bus, where the processor, the memory and the communications interface complete communication with each other through the communication bus; the memory is configured to store at least one executable instruction, and the executable instruction enables the processor to execute operations corresponding to the method according to the first aspect.

According to a fourth aspect of the embodiments of the present application, a computer storage medium is provided, where a computer program is stored on the medium, and when the program is executed by a processor, the method according to the first aspect or the second aspect or the third aspect is implemented.

According to a solution provided in the embodiments of the present application, when a document-based man-machine dialog interaction is in progress, a pre-generated document knowledge graph is used. The document knowledge graph is generated based on hierarchical structure information and content information of a plurality of documents, where the structure information represents a hierarchical structure of a document. Generally, most documents have a hierarchical structure, for example, a top-down document hierarchical structure may be a hierarchical structure of title-subtitle-paragraph-sentence in sequence; etc. For the document knowledge graph generated based on the hierarchical structure of documents, multi-level knowledge parsing and representation can be performed on the documents. As a result, when a subsequent determination is made based on the document knowledge graph to document content that matches the question vector, the question vector can be matched to the corresponding content of a specific document hierarchy, thereby making the obtained document content more accurate and reasonable, avoiding generation of irrelevant or incomprehensible document fragments, and improving the accuracy of question-answer interaction and the efficiency of man-machine dialog interaction.

### BRIEF DESCRIPTION OF DRAWINGS

In order to explain the technical solution of the embodiments of the present application or the prior art clearer, the drawings that need to be used in the description of the embodiments or the prior art will be briefly introduced in the following. Obviously, the drawings in the following description are intended for some embodiments recorded in the embodiments of the present application. For those of ordinary skill in the art, other drawings can be obtained according to these drawings.
FIG. 1 is a schematic diagram of an exemplary system applicable to an embodiment solution of the present application.
FIG. 2A is a structure block diagram of a man-machine dialog system according to a first embodiment of the present application.
FIG. 2B is an illustrative text diagram in the embodiment shown in FIG. 2A.
FIG. 2C is a schematic diagram of hierarchical structure information corresponding to text shown in FIG. 2B.
FIG. 2D is a schematic structure diagram of an exemplary pre-trained language model in the embodiment shown in FIG. 2A.
FIG. 3 is a flowchart of steps of a training method of a pre-trained language model according to a second embodiment of the present application.
FIG. 4A is a flowchart of steps of a man-machine dialog method according to a third embodiment of the present application.
FIG. 4B is a schematic diagram of an exemplary scenario in the embodiment shown in FIG. 4A.
FIG. 5 is a schematic structure diagram of an electronic device according to a fourth embodiment of the present application.

### DESCRIPTION OF EMBODIMENTS

In order to enable those skilled in the art to better understand the technical solution in the embodiments of the present application, the following will provide a clear and comprehensive description of the technical solution in the embodiments of the present application in conjunction with the drawings in the embodiments of the present application. Obviously, the described embodiments are part of the embodiments of the present application, not all of them. Based on the embodiments of the present application, all other embodiments obtained by those of ordinary skill in the art should be within the protection scope of the present application.

The following will provide further description of specific implementation of the embodiments of the present application in conjunction with the drawings of the present application.

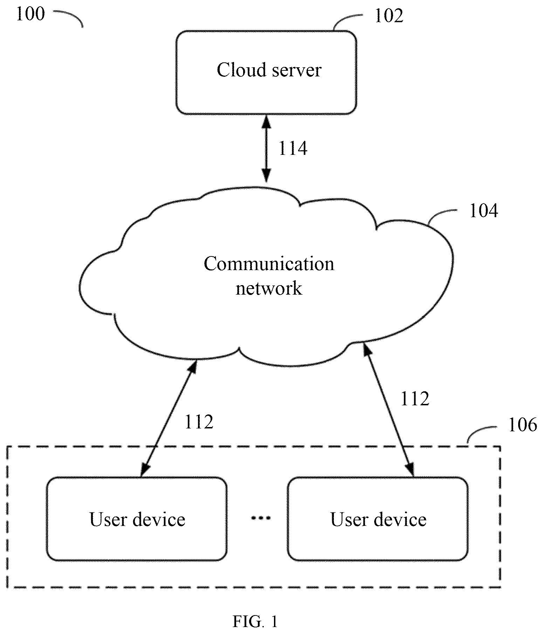

FIG. 1 shows an exemplary system applicable to an embodiment solution of the present application. As shown in FIG. 1, the system 10 may include a cloud server 102, a communication network 104 and/or one or more user devices 106, an example in FIG. 1 is multiple user devices.

The cloud server 102 may be any suitable device for storing information, data, program(s), and/or any other suitable types of content, including but not limited to a distributed storage system device, a server cluster, a computing cloud server cluster, etc. In some embodiments, the cloud server 102 may perform any appropriate function. For example, in some embodiments, the cloud server 102 may perform a document-based man-machine dialog task. As an optional example, in some embodiments, the cloud server 102 stores a document knowledge graph, the document knowledge graph is generated based on hierarchical structure information and content information of documents. Based on the document knowledge graph, the cloud server 102 can determine node content of a node that is matched with a user's question, to ultimately generate an answer for the question. As another example, in some embodiments, the cloud server 102 can also construct and generate the document knowledge graph on its own. As an optional example, in some embodiments, the cloud server 102 is equipped with a man-machine dialog system, and a man-machine dialog function is achieved through the construction and use of the man-machine dialog system. As an optional example, in some embodiments, the man-machine dialog system includes at least an online question-answer engine module and an offline document knowledge graph module. But not limited to this, it can also include an intelligence document module and a pre-trained module. Specific functions and implementations of these modules will be described in detail hereinafter. In some embodiments, the cloud server 102 can receive a question sent by the user device 106, process the question through a man-machine dialog system to obtain answer content corresponding to the question, and provide the answer content as feedback to the user device 106.

In some embodiments, the communication network 104 may be any suitable combination of one or more wired and/or wireless networks. For example, the communication network 104 may include any one or more of the following: Internet, intranet, wide area network (Wide Area Network, WAN), local area network (Local Area Network, LAN), wireless network, digital subscriber line (Digital Subscriber Line, DSL) network, frame relay network, asynchronous transfer mode (Asynchronous Transfer Mode, ATM) network, virtual private network (Virtual Private Network, VPN) and/or any other suitable communication network. The user device 106 can be connected to the communication network 104 through one or more communication links (e.g., a communication link 112), the communication network 104 can be linked to the cloud server 102 via one or more communication links (e.g., a communication link 114). The communication link may be any communication link suitable for transmitting data between the user device 106 and the cloud server 102, such as a network link, a dial-up link, a wireless link, a hard wired link, any other suitable communication link, or any suitable combination of such links.

The user device 106 may include any one or more user devices suitable for interacting with the user. In some embodiments, the user can input a question through the user device 106, and the user device 106 sends the question to the cloud server 102 through the communication network 104. The cloud server 102 processes the question and finally obtains the answer content that is matched with the question. The answer content is then returned to the user device 106 through the communication network 104. The user device 106 will then display or spread the answer content to the user. In some embodiments, the user device 106 may include any suitable type of devices. For example, in some embodiments, the user device 106 may include a mobile device, a tablet computer, a laptop computer, a desktop computer, a wearable computer, a game console, a media player, a vehicle entertainment system, and/or any other suitable type of user devices.

Based on the above system, the solution of the present application will be explained through multiple embodiments in the below.

For the convenience of understanding the solution in the embodiments of the present application, the man-machine dialog system in an embodiment of the present application will be first described below.

### First embodiment

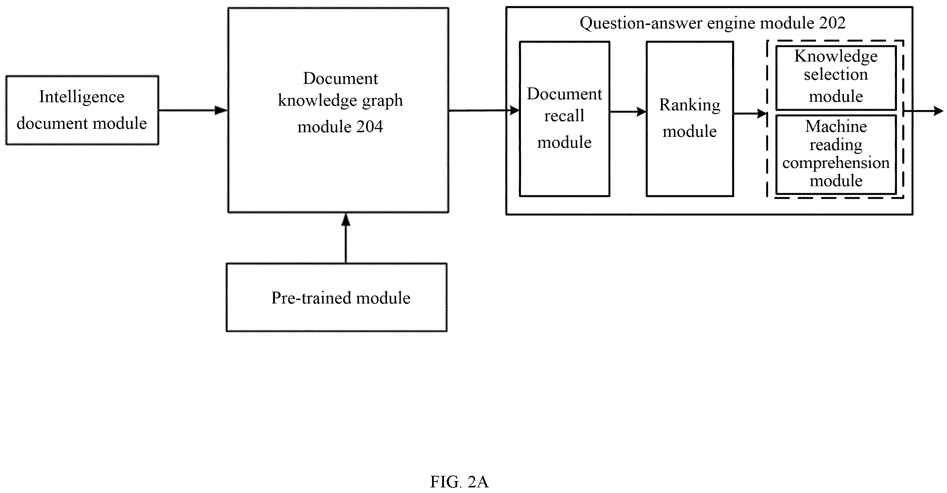

Refer to FIG. 2A, it shows a structure block diagram of a man-machine dialog system according to the first embodiment of the present application.

It can be seen that, from FIG. 2A, the man-machine dialog system in the embodiment of the present application includes at least a question-answer engine module 202 and a document knowledge graph module 204. The question-answer engine module 202 can support online processing for a question proposed by a user, and the document knowledge graph module 204 can offline pre-construct a document knowledge graph.

The question-answer engine module 202 can convert the question of the user into a corresponding question vector; and compare the question vector with feature representations corresponding to a plurality of document nodes in a document knowledge graph stored by the document knowledge graph module 204, to determine, from the plurality of the document nodes, a target document node that is matched with the question vector; and generate an answer for the question according to node content corresponding to the target document node that is matched with the question vector. The document knowledge graph is generated based on hierarchical structure information and content information of a plurality of documents; the document knowledge graph module 204 can store the document knowledge graph, and provide access to the document knowledge graph.

The question of the user can be a question input through any channel provided by the user device, for example, it can be a text question input through an input box in a question input interface, or a search question input through a search box in an interface, or a question input by the user through voice, that is, a voice question. Subsequently, the user device sends the question of the user to the cloud server. When the question of the user is a text question, it can be directly sent to the cloud server; when the question of the user is a voice question, it can also be directly sent to the cloud server, the cloud server will convert the voice question into a text question; or, the user device also can convert the voice question into a text question and then send the text question to the cloud server. Furthermore, after obtaining the text question, the cloud server can convert the text question into a question vector. The specific way to convert the text question of the user into the question vector can be achieved by those skilled in the art using flexible conversion methods according to actual needs. In a feasible manner, a method such as word2vec can be used to convert the text question of the user into the question vector. In another feasible manner, a method such as semantic extraction can be used to extract semantic of the text question as the question vector. However, regardless of which method is used, it is applicable to the solution of the embodiment of the present application. Furthermore, the question vector can be compared and matched with feature representations corresponding to a node in the document knowledge graph in the document knowledge graph module 204. The feature representation of the node is used to represent the feature of the node, including at least a hierarchical structure feature and a document content feature.

The document knowledge graph module 204 stores the pre-generated document knowledge graph, the document knowledge graph is constructed based on a plurality of documents. For each document, its corresponding hierarchical structure information is extracted. The hierarchical structure information of the document means a hierarchical structure of the document. For example, from top to bottom, it can include: title-subtitle-paragraph-sentence, or title-subheading 1-subheading 2-... subheading N-paragraph-sentence, etc. But not limited to this, some documents may also have only heading 1, or even no title, etc., which can also be applicable to the embodiments of the present application.

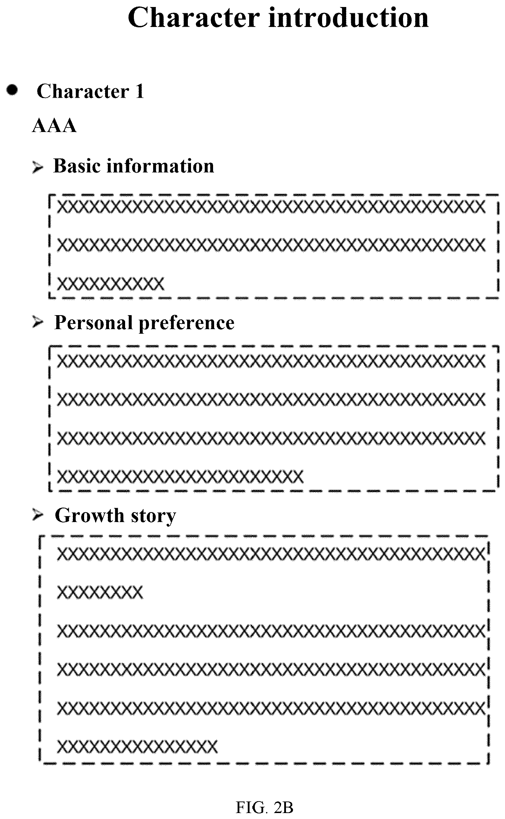

A specific example of a document is shown in FIG. 2B, where the bold text "Character introduction" at the top is the title of the text, also known as a primary title. The "Character 1" below is a subheading 1 under the title, which is also referred to as a secondary title in this example for unified naming. "AAA" is text content corresponding to the "Character 1". The "Basic information", "Personal preference", and "Growth story" under "Character 1" all are tertiary titles, and there are one or more paragraphs under a respective tertiary title, as shown in dashed boxes under respective tertiary titles, each paragraph including one or more sentences. It should be noted that in the embodiments of the present application, unless otherwise specified, quantities related to "many" such as "multiple" and "a plurality of" all mean two or more.

Based on this, the hierarchical structure information of the document can be extracted. In a feasible manner, the man-machine dialog system of the embodiments of the present application may further include an intelligence document module, configured to parse the plurality of documents, to obtain hierarchical structure information corresponding to a respective document. The plurality of documents may be obtained through big data acquisition, for example, they are obtained through webpage content, or they are documents in a document database, or they are documents obtained through other means, etc. The embodiments of the present application do not limit the ways for acquiring the plurality of documents.

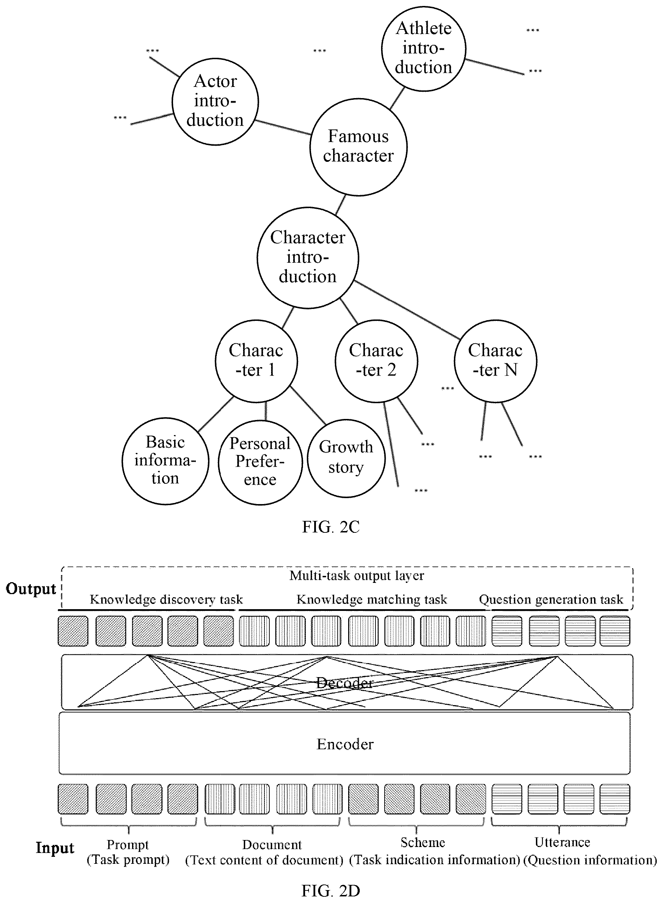

In a specific implementation, the intelligence document module can be implemented based on a machine learning model for documents, the machine learning model may parse a document including a webpage, a text file, etc., to obtain corresponding document content (text content), position information of the document content and/or position information of a title, the hierarchical structure information of the document, etc. In the embodiment of the present application, a specific implementation structure and a process procedure of the machine learning model are not limited, as long as the above-mentioned function(s) can be implemented. During specific implementation, the machine learning model may first convert a document into an image format, and use a recognition algorithm, such as an optical character recognition (Optical Character Recognition, OCR) technology or an object detection (object detection) technology, to identify a text block on the page of the document, such as a title, a paragraph, etc., and provide its prediction of type, the type is, for example, title, paragraph, etc. Optionally, the predicted types may also include header and footer, image, table, etc. Then, the machine learning model can construct a logical structure classification model between text blocks based on predicted types of each text block, thereby obtaining parent-child relationships between the text blocks, such as a paragraph text block being a sub-module of its title text block, and so on. Thus, hierarchical structure information between the text blocks within the document, i.e. the hierarchical structure information of the document, is obtained. Still take the document shown in FIG. 2B as an example, the hierarchical structure information of the document obtained can be shown in FIG. 2C. As shown in FIG. 2C, the titles in the document are represented in the form of nodes, and document content corresponding to the titles can be mounted under their respective titles, which can be used as part of node data in different types of data formats.

However, in the hierarchical structure information parsed by the intelligence document module, for those nodes with document content, the document content mounted onto the nodes is still the corresponding paragraph text below, and the text granularity is still relatively coarse. In order to more accurately represent the text features of document content under different nodes, in a feasible manner, the document content can be processed at a finer granularity, including: acquiring the hierarchical structure information of the document through the document knowledge graph module; obtaining a hierarchical structure chain of a node in part of or all of hierarchies and document content corresponding to the node according to the hierarchical structure information; parsing the document content of the node in terms of a pre-set type of data unit, and obtaining the document data unit corresponding to a respective node according to a parsing result; furthermore, constructing and generating a corresponding document knowledge graph according to a respective node and a document data unit corresponding to the respective node. For example, the document data unit corresponding to the respective node is mounted onto the respective node, and the document knowledge graph is generated according to the nodes subjected to the mounting and their corresponding hierarchical structure chains. For those hierarchies that have no document content, their document content can be set to empty or default character(s), or no document content processing is applied to that part of the nodes. The pre-set type of data unit may include at least one of followings: a triple data unit corresponding to the document content, a question-answer pair (Question-Answer, QA) data unit corresponding to the document content, or a data unit of the document content and key information corresponding to the document content. From this, it can be seen that the document data unit can be a data unit that represents a certain form of cross-document-content relationships (triple, QA pair, or document content-key information, etc.). Through these document data units, on the one hand, various types of documents can be effectively organized and managed combined with hierarchical structure information; on the other hand, data that effectively addresses various issues can be generated through these document data units, to improve the speed and efficiency of subsequent answer retrieval for user questions.

During the above process, the hierarchical structure chain refers to a chain formed by all nodes arranged in a hierarchical order along a path starting from a node in a highest hierarchy of the document, such as a node where the primary title is located, and ending at a current node. At least some nodes in the hierarchical structure chain have corresponding document content. After parsing the document content corresponding to these nodes in terms of a pre-set type of data unit to obtain a parsing result, that is, after obtaining the corresponding document data unit(s) through parsing, the obtained document data unit(s) can be mounted onto the hierarchical nodes corresponding to the document content in the hierarchical structure chain corresponding to the obtained document data unit(s), to form a final document knowledge graph.

In order to achieve efficient and accurate parsing of document content, in a feasible manner, parsing in terms of a pre-set type of data unit can be performed for the document content of the node(s) in at least part of hierarchies through a pre-trained language model that is trained by a pre-trained module; and according to a parsing result, a document data unit corresponding to the node is obtained. The pre-trained module is configured to perform multi-task joint pre-training on the pre-trained language model based on a training sample, to obtain a model that is capable of outputting data corresponding to the training sample, where the data is used for generating the pre-set type of data unit. The pre trained language model can be any suitable model capable of performing multi-task document processing, including but not limited to a pre-trained language model based on an encoder-decoder structure(s).

In an example, as shown in FIG. 2D, the pre-trained language model includes an encoder-decoder-multi-task output layer. The encoder is configured to receive input text and encode the input text into an encoded vector; the decoder is configured to decode the encoded vector to decode it into a vector of a corresponding task; the multi-task output layer is configured to output the vector of the corresponding task as a corresponding task result.

Taking multi-tasks being respectively a knowledge discovery task, a knowledge matching task and a question generation task as an example, the knowledge discovery task is used to discover required content from document content, such as information extraction, frequently asked questions (Frequently Asked Questions, FAQ) knowledge point mining, text representation, etc. The knowledge matching task is used to determine whether two parts of the input text, namely long text and short text in the embodiment of the present application, such as text-abstract, text-title, etc., are matched with each other. The question generation task is used to generate a corresponding question based on the text. For example, when the input text is a large piece of text content and the pre-trained language model recognizes it as a knowledge discovery task, such as a document triple extraction task, the pre-trained language model will output a triple corresponding to the text; when there is a corresponding text abstract or text title in the input text, and the pre-trained language model recognizes it as a knowledge matching task, a matching result about whether the text matches the text-abstract or text-title will be output; when the input text includes answer text that can be used for answer generation, and the pre-trained language model recognizes it as a question generation task, a question corresponding to the text will be output.

The implementation of the pre-trained language model processing a variety of different tasks is based on multi-task training performed by the model in a pre-training phase. In the training phase, a large quantity of Internet non-labeled data, pseudo-labeled data generated through a model or remote supervision, or publicly available task-type artificial precisely-labeled data or the like can be collected as training samples of the pre-trained language model. Pre-training samples that are finally generated mainly include three parts: knowledge discovery data for knowledge discovery tasks, QA (Question-Answer) data for question generation tasks, and text matching data for knowledge matching tasks. For the knowledge discovery tasks, the knowledge discovery data can be derived from aligning Chinese Wikipedia and Wikipedia knowledge graphs by using an entity chain pointing tool, thereby obtaining a large amount of alignment data of text-triple; in the training phase of the pre-trained language model, the model inputs the text of the text-triple that has been aligned, takes the triple in the text-triple as a supervision condition, and expects the model to predict and output the triple. For the question generation tasks, the QA data can be derived from machine reading comprehension data automatically generated by a machine reading comprehension model, including a large amount of alignment data of text-answer-question; in the training phase of the pre-trained language model, the model inputs the text and answer of the text-answer-question, takes the question as a supervision condition, and expects the model to predict and output the question. For the knowledge matching tasks, the text matching data can be derived from publicly available data of text-abstract and text-title, including a large amount of alignment data of the text-abstract and the text-title; in the training phase of the pre-trained language model, the model inputs the text-abstract and the text-title, and expects the model to output a result about whether they are matched with each other. During the training process, the above three types of data are mixed, and a task prompt indicating the training task is used before the training samples. The task prompt, together with the training samples to be input into the model, adopts a unified sequence generation paradigm (such as task prompt-text content-task indication information-question information) to conduct end-to-end modeling. Optionally, the pre-trained language model can specifically adopt an encoder-decoder structure based on a T5 architecture. For the specific structure of the pre-trained language model based on the T5 architecture, reference can be made to relevant arts and will not be further elaborated here.

The task prompt can be set by those skilled in the art according to actual needs, as long as it can effectively represent a corresponding task. The triple corresponding to the text can adopt a conventional triple structure, such as {first entity, entity relationship, second entity}, but not limited to this. In a practical application, those skilled in the art can also set a corresponding triple according to actual needs. In addition, a text quantity of data of text-abstract and text-title is much smaller than the overall text to which they belong. Therefore, the knowledge matching task can also be seen as a task for determining whether long-text and short-text are matched with each other.

In a simple example, text to be input into the pre-trained language model may be "<d>AAA was officially founded on October 1, 2020</d><a>When was AAA founded</a>", where <> is a descriptor, "d" represents document text, and "a" represents a question. Therefore, the sequence generation paradigm that is input into the model may be "<p>Knowledge Discovery</p><d>AAA was officially founded on October 1, 2020</d><a>When was AAA founded</a>", where "p" represents a task indicator.

Corresponding to an input of the pre-trained language model shown in FIG. 2D, "<p>Knowledge Discovery</p>" corresponds to an input of a "Prompt" (task prompt) section, "<d>AAA was officially founded on October 1, 2020</d>" corresponds to an input of a "Document" (document text) section, and "<a>When was AAA founded</a>" corresponds to an input of an "Utterance" (question information) section. As this task is a knowledge discovery task, it needs to determine the founding time of AAA from the text. Therefore, an input corresponding to a "Scheme" (task indication information) section is task prompt information to be discovered, such as "<s>founded-time</s>". The content of various parts mentioned above is input into the encoder of the pre-trained language model after splicing, to generate a corresponding encoded vector. If it is determined through the task prompt that a current input is used for implementing the knowledge discovery task, the decoder will, in conjunction with information on the question "When was AAA founded", focus on extracting the feature(s) related to an answer for the question. Furthermore, the extracted feature(s) is/are output to a branch corresponding to the knowledge discovery task, to predict the answer for "when was AAA founded". Based on the predicted answer, a preset loss function, and labeled data ("October 1, 2020") corresponding to the text, a corresponding loss value is obtained. Based on the loss value, parameter adjustment at this time can be made to the pre-trained language model. Cases are similar for the knowledge matching task and the question generation task, but regardless of the task type, the parameter adjustment will involve all task branches of the pre-trained language model, but different weights can be used for the parameter adjustment. For example, a parameter adjustment weight of a branch corresponding to a current task is greater than that of other task branches. The above-mentioned training process is iteratively reciprocated until the training of the pre-trained language model is completed. After the training of the pre-trained language model is completed, it can subsequently assist in parsing the document content in terms of a data unit, thereby providing node data with finer granularity for constructing the document knowledge graph. In the subsequent inference phase, the pre-trained language model for which the training is completed can determine a task corresponding to the document according to the input text content of the document, and output a result corresponding to the task to generate specific data for the document data unit.

For example, for the document content corresponding to a certain hierarchical node, parsing in terms of the document data unit is performed through the pre-trained language model for which the training is completed, for example, respectively obtaining a triple, a question Q, and matching information of text-abstract or text-title by means of parsing. Then, furthermore, document data units can be generated based on the triple, a QA pair as well as key information, where the QA pair is generated based on a combination of an answer A input by the model and a question Q corresponding to the answer A output by the model, the key information(such as the abstract corresponding to the text or the title corresponding to the text) is generated when determining, based on the matching information, that the matching exists for text-abstract or text-title. Then, these document data units can then be stored into attribute fields of corresponding nodes, so that the document data units are mounted to the hierarchical nodes, accurate question matching can be performed subsequently based on these data.

In addition, for the question generation task, in a feasible manner, after the pre-trained language model outputs a question, transformation and/or generalization processing can be made on the question. For example, through a question transformation model, the question output by the pre-trained language model can be used as an input of the question transformation model, and similar questions in different styles can be used as an output. For example, the transformation or generalization of the question can be achieved through changes in question words, questioning methods, and so on. Alternatively, it can be considered that, based on key information of the question output by the pre-trained language model, such as keyword(s), multiple different questions based on the keyword(s) can be generated. For example, if the question output by the pre-trained language model is "When was AAA founded?", after transformation or generalization processing, other multiple questions obtained may be "At what time was AAA founded?", "In which year was AAA founded?", "I want to know the founding time of AAA", etc. Thus, the processing capability and generalization capability of the man-machine dialog system can be enhanced for different forms of questions with the same intention, and the effectiveness and compatibility of question-answer interactions can be improved.

Furthermore, in order to facilitate matching with the question vector sent by the question-answer engine module, in a feasible manner, a corresponding vector can also be generated for a node in the document knowledge graph. For a primary node of a document, such as a title node, a document representation related to the overall document can be generated for the primary node, that is, feature extraction can be performed based on overall hierarchical structure information and entire content of the document, a document representation that can represent global features of the document is generated. For a non-primary node of the document, such as a subtitle or subheading node, feature extraction can be performed based on a hierarchical structure chain and node content of the node, and a corresponding vector (that is, a knowledge representation of the node) is generated. This knowledge representation carries both information of a hierarchical structure of at least one level from the primary node to a current node of the document, and feature information of the document content of the current node. Both the document representation and the knowledge representation can be mounted under the node(s) to which they belong, for example, being mounted under the nodes to which they belong in the form of attribute data. That is to say, in this case, when the document data unit corresponding to the node is mounted to the node to generate a document knowledge graph, a corresponding node vector will be generated and correspondingly stored in a respective hierarchical node based on the hierarchical structure chain and original node content corresponding to the respective hierarchical node, to generate new node content; the document knowledge graph is then generated based on the respective hierarchical node and new node content of the respective hierarchical node.

In a feasible manner, the node(s) in the document knowledge graph can be stored using a JSON format. JSON (JavaScript Object Notation, JS object notation) is a lightweight, KEY-VALUE storage structure format that uses a text format completely independent of programming languages to store and represent data. When storing data in the JSON format, a data object starts with a left parenthesis "{", and ends with a right parenthesis "}", with each "name" being followed by a colon ":", and a comma being used to separate KEY-VALUE pairs (key-value pairs). The adoption of the JSON format can make data storage more flexible. But it is not limited to this, in a practical application, other data storage formats are also applicable to the solution of the embodiments of present application. Based on this, various attribute data of the node(s), such as data of document data units, can be easily mounted on the node(s).

It should be noted that the document knowledge graph that has been constructed can be used for a long time after construction, but in an optional way, the document knowledge graph can also be updated regularly or irregularly, so that the document knowledge graph can continuously enrich and update the knowledge content, and provide more accurate and timely answers. The updating process can use a new document and adopt the above-mentioned construction approach of the document knowledge graph to generate corresponding nodes for the new document and mount the corresponding nodes to an existing document knowledge graph. Old documents that have been updated can also be used during the updating process. For example, if some content in the document is updated, based on the updated document, nodes of the document can be regenerated according to the above-mentioned construction approach of the document knowledge graph and mounted to the existing document knowledge graph. Thus, the timeliness and knowledge richness of the document knowledge graph are ensured.

When the nodes of the document knowledge graph have corresponding document representations or knowledge representations, the question-answer engine module can compare the question vector with the document representations or the knowledge representations corresponding to the plurality of document nodes in the document knowledge graph stored by the document knowledge graph module, and determine, from the plurality of the document nodes, a target document node that is matched with the question vector. As mentioned earlier, the document representation is used to represent a semantic feature of document entire content that corresponds to a document node and carries hierarchical structure information of a document; the knowledge representation is used to represent a semantic feature corresponding to document content that corresponds to a document node and carries hierarchical structure chain information of a node. Although for a certain document, there may be both a node with document representation(s) and a node with knowledge representation(s), in a practical application, they can be used either separately or in combination. That is to say, the question vector can be matched with the document representation(s), or the question vector can be matched with the knowledge representation(s), or the question vector can be matched with both the document node and the knowledge representation(s). However, by fully considering the hierarchical structure information of the document, even by virtue of the matching simply with the document representation or the matching simply with the knowledge representation, a relatively accurate matching result can still be obtained.

The question-answer engine module can determine the matched document content for the question based on the question vector and the document knowledge graph, to generate a corresponding answer, but in order to improve the efficiency of man-machine interaction and meanwhile avoid adverse effects of man-machine interaction due to abnormal situations, in a feasible manner, the question-answer engine module can include: a document recall module, a ranking module, a knowledge selection module, and a machine reading comprehension module.

The document recall module is configured to compare the question vector with the feature representations (document representations or knowledge representations) corresponding to the plurality of document nodes in the document knowledge graph stored by the document knowledge graph module, and obtain a plurality of candidate document nodes that are matched. This comparison includes but is not limited to comparing through similarity.

The ranking module is configured to rank a plurality of candidate document nodes with use of a ranking model, and based on a ranking result, select from the plurality of candidate document nodes a document node that meets a preset condition as the target document node that is matched with the question vector.

The knowledge selection module is configured to determine, from the document content corresponding to the target document node that is matched with the question vector, whether there is answer content that is matched with the question; if so, the answer content is obtained.

The machine reading comprehension module is configured to determine the answer content for the question from a preset document, when the knowledge selection module fails to determine the answer content that is matched with the question.

Through the document recall module, the plurality of candidate document nodes that are matched with the question vector can be recalled. However, there may also be a node with a low matching degree to the question vector among the plurality of candidate document nodes. Therefore, after the ranking module is used to rank the plurality of candidate document nodes according to their matching degrees, a document node that meets a preset condition is then selected as the target document node. The preset condition may be set by those skilled in the art according to actual needs, for example, nodes ranked in the top N, or nodes with a matching degree greater than a preset matching degree, etc., and no limitation is made in the embodiments of the present application. Optionally, the ranking module may be implemented based on a Ranker model. A target predicted by the Ranker model is not a binary classification problem of being selected or not being selected, but rather an overall ranked order of a list, to optimize the ranking result. Illustratively, the Ranker model can adopt an LTR (Learning To Rank, learning to rank) ranking algorithm to perform ranking, and for a specific implementation of this algorithm, reference can be made to the description in related technologies, which will not be repeated here. Unlike traditional ranking algorithms, in the embodiments of the present application, the ranking algorithm is targeted at data of nodes carrying document hierarchical structure information, rather than simply document content.

In addition, although the knowledge selection module can basically determine the corresponding answer content for the question, in order to avoid an occasional abnormal situation, the question-answer engine module of the embodiments of the present application is also provided with a machine reading comprehension module, namely an MRC module, as a backup. The MRC module can be implemented by using a conventional MRC model and a conventional structure, which is not limited either in the embodiments of the present application.

For the document recall module, it can at least perform recalling based on the matching degree between the question vector and the document representation(s) and/or the knowledge representation(s) of the node(s) in the document knowledge graph. But not limited to this, it can also perform recalling based on a traditional approach, that is, based on an approach of directly matching the question vector with a vector corresponding to the document content of the document, and/or perform strategic recalling through a preset strategy, where the preset strategy includes but not limited to a functional recall strategy, a hotspot recall strategy, a personalized recall strategy, etc. In the embodiments of the present application, specific implementations of the above strategies are not limited. In addition, those skilled in the art may also add other recall strategies according to actual needs, or replace part of or all of the above recall strategies with other recall strategies.

From the above description, a basic hierarchical structure of the document is obtained through an intelligence document module. Parsing in terms of a document data unit is performed on the document through the pre-trained language model for which training is completed, to refine data of a respective node in the structure based on the basic hierarchical structure of the document, thereby fully mining knowledge in the document that can be used for question answering, enabling the man-machine dialog system to have control capability over an generated answer, and providing a data foundation for subsequent accurate matching. The document knowledge graph is constructed and generated by the document knowledge graph module based on the document data unit obtained through the basic hierarchical structure of the document and the document refinement. A user question is received through the question-answer engine module, and an answer corresponding to the question is obtained based on the document knowledge graph. Therefore, the question answering accuracy of the document can be significantly improved.

Through the man-machine dialog system of this embodiment, man-machine dialog is conducted based on a question-answer engine in the question-answer engine module and the document knowledge graph in the document knowledge graph module. When conducting man-machine dialog interaction, different from a traditional approach in which the document is simply treated as long text, the document knowledge graph is finally modeled by forming, through the document knowledge graph, the document into a coarse-grained knowledge skeleton according to a logical hierarchical structure of its content, and then based on this knowledge skeleton, adding a fine-grained document data unit such as a triple, or QA or the like to enrich the content of the knowledge skeleton, thereby forming multi-level knowledge parsing and representation of the document. Applying it to a document-based question answering service, more efficient man-machine dialog interaction effects can be achieved. Through the man-machine dialog system that includes the question engine module and the document knowledge graph module, an overall interaction process from a document to fine-grained question answering has been achieved, which is efficient and accurate, effectively improving the efficiency of man-machine dialog interaction.

### Second embodiment

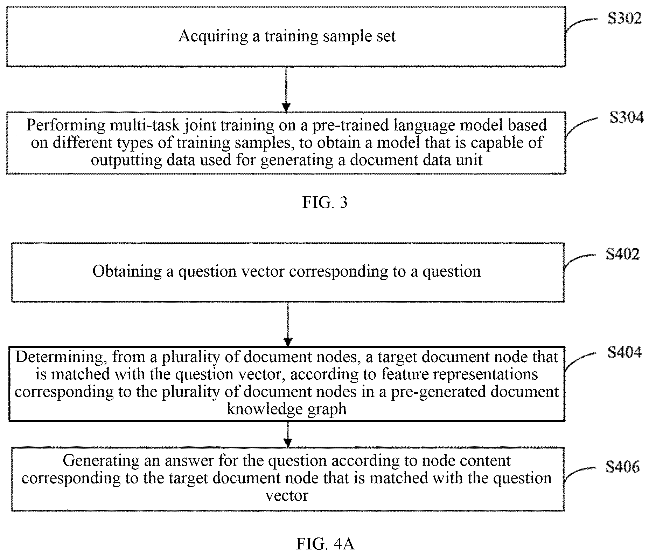

Based on the above system, a training method of a pre-trained language module is also provided in an embodiment of the present application. FIG. 3 shows a flowchart of steps of the method. In the below, the method will be explained in conjunction with FIG. 3 and FIG. 2D.

As shown in FIG. 3, the training method for pre-trained language module includes following steps.

Step S302: acquiring a training sample set.

The training sample set is used to perform training on a pre-trained language model, and the training sample set includes different types of training samples that are used to perform training on the pre-trained language model for different tasks.

In this embodiment, the different types of training samples include part of or all of the following items: a training sample of a text-triple type, a training sample of an answer-question type, a training sample of a text-abstract type, or a training sample of a text-title type. Correspondingly, the different tasks include part of or all of the following tasks: a knowledge discovery task, a question generation task, and a knowledge matching task.

The above-mentioned different types of training samples may be obtained based on a large quantity of Internet non-labeled data, pseudo-labeled data generated through a model or remote supervision, or publicly available task-type artificial precisely-labeled data that is collected. The pre-training samples finally generated based on these data mainly include:
(1) the text-triple type of training sample used for a knowledge discovery task, also known as knowledge discovery task sample data. It can be derived from aligning Chinese Wikipedia and Wikipedia knowledge graphs by using an entity chain pointing tool, to obtain a large amount of alignment data of text-triple which is used as a training sample for the pre-trained language model. For this training sample, the text input into the model is text in the text-triple that has been aligned, the triple in the text-triple is taken as a supervision condition for model training, and the model is expected to predict and output the triple based on the input text.
(2) the answer-question type of training sample used for a question generation task, also known as QA (Question-Answer) sample data. It can be derived from machine reading comprehension data automatically generated by a traditional machine reading comprehension model, including a large amount of alignment data of text-answer-question which is used as a training sample for the pre-trained language model. For this training sample, the input into the model is the text and the answer in the text-answer-question, the question therein is taken as a supervision condition for model training, and the model is expected to predict and output the question based on the input text and answer.
(3) the text-abstract type of training sample and/or the text-title type of training sample used for a knowledge matching task, also known as text matching sample data. It can be derived from any publicly available data of text-abstract and text-title, including a large amount of alignment data of the text-abstract and the text-title, used as a training sample for the pre-trained language model. For this training sample, the input into the model is the text-abstract or the text-title, and the model is expected to output a result about whether they are matched with each other.

Step S304: performing multi-task joint training on the pre-trained language model based on the different types of training samples, to obtain a model that is capable of outputting data used for generating a document data unit.

The document data unit is used to construct a document knowledge graph with hierarchical structure information, it can be presented as a data unit representing a certain form of cross-document-content relationships (triple, QA pair, or document content-key information, etc.).

In this embodiment, the multi-task joint training may include joint training of a knowledge discovery task, a knowledge matching task, and a question generation task. During the training process, the above-mentioned different types of training samples will be mixed, and a task prompt indicating the training task(s) will be used before the training samples, where the task prompt, together with the training samples to be input into the model, adopts a unified sequence generation paradigm (such as task prompt-text content-task indication information-question information), to be input into the model to perform training on the corresponding task(s).

The knowledge discovery task is used to discover required content from document content, such as information extraction, frequently asked questions (Frequently Asked Questions, FAQ) knowledge point mining, text representation, etc. The knowledge matching task is used to determine whether two parts of the input text, such as text-abstract, text-title, etc., are matched with each other. The question generation task is used to generate a corresponding question based on text. For example, when the input text is a large piece of text content and the pre-trained language model recognizes it as a knowledge discovery task through the task prompt, such as a document triple extraction task, the pre-trained language model will output a triple corresponding to the text; when there is a corresponding abstract or title provided in the input text, and the pre-trained language model recognizes it as a knowledge matching task through the task prompt, a matching result about whether the text matches the abstract or title will be output; when the input text includes answer text that can be used for answer generation, and the pre-trained language model recognizes it as a question generation task through the task prompt, a question corresponding to the text will be output. In this embodiment, for a loss function corresponding to a respective task, the loss function suitable for the task can be adopted by those skilled in the art according to actual needs, and there is no limitation in the embodiments of the present application.

An illustrative structure of a pre-trained language model is shown in FIG. 2D, including: an encoder-decoder-multi-task output layer. The encoder is configured to receive input text and encode the input text into an encoded vector; the decoder is configured to decode the encoded vector to decode it into a vector of a corresponding task; the multi-task output layer is configured to output the vector of the corresponding task as a corresponding task result. For example, assuming that a current task is a triple extraction task, then, first, the training samples will be input into the model using a paradigm of task prompt-text content-task indication information-question information. After that, the encoder encodes the entire paradigm to generate an encoded vector, where the encoded vector carries information indicating the task. The decoder further extracts corresponding task-related features from the encoded vector based on the information indicating the task, to generate a decoded vector. Similarly, the decoded vector also carries information indicating the task; based on the information, the decoded vector will be input into a corresponding task branch in the multi-task output layer, which in this example is a branch of the knowledge discovery task. The corresponding triple is predicted and output through this task branch, the predicted and output triple and the triple in the training samples will be used as labeled triples, and a loss value is calculated based on a preset loss function. Parameter adjustment is then performed on the entire pre-trained language model based on the loss value, to achieve the training on the model. A weight of parameter adjustment of the branch of the knowledge discovery task may be greater than that of other task branches.

After the training is completed, the pre-trained language model will be capable of outputting data used for generating a document data unit, such as, respectively a triple, a question Q, and matching information of text-abstract or text-title. Subsequently, when constructing a document knowledge graph, the man-machine dialog system can generate a document data unit based on the triple, a QA pair, as well as key information that are output by the model for the text, where the QA pair is generated based on a combination of an answer A input by the model and a question Q corresponding to the answer A output by the model, and the key information is generated when determining, according to matching information (such as the abstract corresponding to the text or the title corresponding to the text), that the matching exists for text-abstract or text-title. Then, these document data units can then be stored in attribute fields of corresponding nodes, the nodes in the document knowledge graph are generated based on this, and the document knowledge graph is then finally generated based on the respective nodes.

Through this embodiment, a pre-trained language model capable of knowledge mining to documents can be obtained, which can fully mine knowledge that can be used for question answering in the document(s) in subsequent applications, to achieve multi-level knowledge parsing and representation of the document(s), and effectively serve a document-based man-machine system.

It should be noted that the above description of some steps in the pre-trained language training model is relatively brief, and for relevant information, reference can be made to the description in a corresponding section of the first embodiment.

### Third embodiment

This embodiment is based on the man-machine dialog system described in the first embodiment, and explains the man-machine dialog process from an application level of the man-machine dialog system.

FIG. 4A shows a flowchart of steps of a man-machine dialog method of this embodiment, and the man-machine dialog method includes the following steps.

Step S402: obtaining a question vector corresponding to a question.

The question can be a raw text question or a text question converted from a voice question, or a text question converted from other forms of questions. Based on the text question, the man-machine dialog system performs vector transformation processing on the text question, to convert it into a question vector. For example, the question-answer engine module of the man-machine dialog system can perform vector transformation processing on the text question, to generate a corresponding question vector.

Step S404: determining, from a plurality of document nodes, a target document node that is matched with the question vector, according to feature representations corresponding to the plurality of document nodes in a pre-generated document knowledge graph.

The document knowledge graph is generated based on hierarchical structure information and content information of the plurality of documents.

As described in the first embodiment, the document knowledge graph can be pre-constructed offline. Firstly, a large amount of documents are acquired, and then for each document, hierarchical structure information of this document is acquired. Then, according to the hierarchical structure information, the document data unit(s) corresponding to the node(s) in at least part of hierarchies is/are acquired. After that, based on the node(s) and the document data unit(s) corresponding to the node(s), a corresponding document knowledge graph is constructed and generated.

In a preferred manner, a large amount of documents are firstly acquired, and then for each document, hierarchical structure information of this document is acquired. Then, according to the hierarchical structure information, a hierarchical structure chain of nodes in part of or all of hierarchies corresponding to the document and document content corresponding respectively to these nodes are obtained. According to a parsing result acquired from parsing respective document content of these nodes in terms of a pre-set type of data unit, document data units corresponding to these nodes are obtained. Then, the document data units corresponding to the respective nodes are mounted to the respective nodes, to generate the document knowledge graph according to the nodes subjected to the mounting and the hierarchical structure chain corresponding to the nodes. The pre-set type of data unit includes but not limited to at least one of followings: a triple data unit corresponding to the document content, a question-answer pair data unit corresponding to the document content, or a data unit of the document content and key information corresponding to the document content.

When the man-machine dialog system in the first embodiment is adopted, parsing in terms of the pre-set type of data unit can be performed on the document content corresponding to the node(s) in part of or all of hierarchies through the pre-trained language model for which pre-training is completed, to obtain a parsing result. This pre-trained language model is a multi-task language model that takes text content as an input and takes data used for generating multiple preset types of document data units as an output, which can more effectively conduct extraction of the document data units. The document knowledge graph is constructed and generated by the document knowledge graph module of the man-machine dialog system based on the hierarchical structure information of the document output by the intelligence document module in combination with the parsing result (i.e. the document data unit) that is obtained by the pre-trained language module from parsing the document in terms of the document data unit.

In addition, in order to facilitate the subsequent matching with the question vector, when the document data units corresponding to nodes in all of or part of the hierarchies are mounted to the nodes to generate the document knowledge graph: a corresponding node vector can be generated and stored into a node in a respective hierarchy according to a hierarchical structure chain corresponding to nodes in respective hierarchies and original node content, to generate new node content; a document knowledge graph is then generated according to the node in the respective hierarchy and the new node content of the node in the respective hierarchy. This node vector carries both hierarchical structure information of a current node in the entire document, as well as feature information of document content of the current node, which can provide an effective data basis for subsequent efficient and accurate vector matching.

Illustratively, for a primary node of a document, such as a title node, a document representation related to the overall document can be generated for the primary node, for example, feature extraction can be performed based on overall hierarchical structure information and entire content of the document, a document representation that can represent global features of the document is generated. For a non-primary node of the document, such as a subtitle or subheading node, feature extraction can be performed based on a hierarchical structure chain and node content of the node, and a corresponding vector (that is, a knowledge representation of the node) is generated. This knowledge representation carries both information of a hierarchical structure of at least one level from the primary node to a current node of the document, and feature information of the document content of the current node. Both the document representation and the knowledge representation can be mounted under the node(s) to which they belong, for example, being mounted under the nodes to which they belong in the form of attribute data. That is to say, in this case, when the document data unit corresponding to the node is mounted to the node to generate a document knowledge graph: a corresponding node vector will be generated and correspondingly stored in a respective hierarchical node based on the hierarchical structure chain and original node content corresponding to the respective hierarchical node, to generate new node content; the document knowledge graph is then generated based on the respective hierarchical node and new node content of the respective hierarchical node.

The document knowledge graph that has been once constructed can be used for a long time after construction. Furthermore, the document knowledge graph can also be updated regularly or irregularly.

Based on the document knowledge graph and document representations or knowledge representations corresponding to the respective nodes in the document knowledge graph, in a feasible manner, the determining, from the plurality of document nodes, the target document node that is matched with the question vector, according to the feature representations corresponding to the plurality of document nodes in the pre-generated document knowledge graph can be implemented as: determining, from the plurality of document nodes, the target document node that is matched with the question vector, according to the document representations or the knowledge representations corresponding to the plurality of document nodes in the pre-generated document knowledge graph. The document representation is used to represent a semantic feature of document entire content that corresponds to a document node and carries hierarchical structure information of a document; the knowledge representation is used to represent a semantic feature corresponding to document content that corresponds to a document node and carries hierarchical structure chain information of a node.

Although by comparing the question vector with the document representations and/or the knowledge representations corresponding to the nodes in the document knowledge graph, the plurality of candidate document nodes that are matched with the question vector can be recalled, there may also be node(s) with a low matching degree to the question vector among the plurality of candidate document nodes. Therefore, in a feasible manner, when determining, from the plurality of document nodes, the target document node that is matched with the question vector, it may be: determining, from the plurality of document nodes, the plurality of candidate document nodes that are matched with the question vector; and ranking the plurality of candidate document nodes with use of a ranking model, and based on a ranking result, selecting from the plurality of candidate document nodes a document node that meets a preset condition as the target document node that is matched with the question vector. Illustratively, the ranking model may be implemented as the Ranker model. The preset condition may be set by those skilled in the art according to actual needs, for example, nodes ranked in the top N, or nodes with a matching degree greater than a preset matching degree, etc., and no limitation is made in the embodiments of the present application.

In addition, the man-machine dialog system can also provide a user with a product interaction logic interface, to provide better interaction and result presentation for the user. Illustratively, the man-machine dialog system can be equipped with an interface that includes four main parts: document category management, document uploading, document knowledge intervention, and document question answering.

The document category management interface is configured to divide and manage categories corresponding to various documents uploaded by the user. The document uploading interface is configured for the user to upload document(s). The document knowledge intervention interface is configured to receive edition and modification of document data units generated after parsing the document(s) in terms of the data units based on the pre-trained language model of the man-machine dialog system. The document question answering interface is configured to edit and modify the question answering generated after the pre-trained language model performing QA parsing to the document(s).

During a construction phase of the document knowledge graph, after the user uploads the document(s) to a cloud server through the document uploading interface, the cloud server automatically constructs and stores the document knowledge graph in a form that is imperceptible to the user. After the construction is completed, the document knowledge intervention interface can be accessed, fine-grained knowledge of nodes in the document knowledge graph (data in the document data unit) is intervened through a simple dividing manner, thus achieving light-weighted intervention effectiveness. After that, a question answering test can be conducted based on the document question answering interface, and when the test is completed, click on the document to take effect, then document question answering services can be provided.

Step S406: generating an answer for the question according to node content corresponding to the target document node that is matched with the question vector.

Because the document representation or the knowledge representation of the target document node that is matched with the question vector carries corresponding hierarchical structure information and feature information of the document content, it is possible to quickly locate a specific document content part of a specific node. Therefore, a corresponding answer is generated for the question based on the document content. For example, this part of the document content is directly used as the answer, or an answer is generated according to the document content, based on a preset answer template, etc.

It should be noted that the above description of the specific implementation of a respective step is relatively simple, and for relevant aspects, reference can be made to a corresponding part in the aforementioned first embodiment.

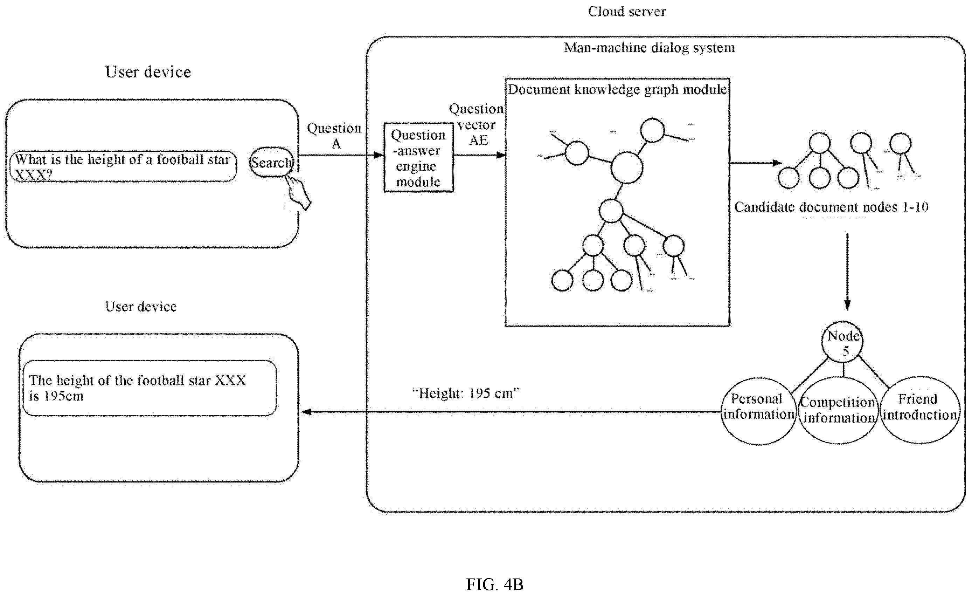

In the below, taking a specific scenario as an example, the above process is explained illustratively, as shown in FIG. 4B.

Assuming that a user inputs a question A: "What is the height of a football star XXX" through a search page provided by a user device, and sends the question to a cloud server. After receiving the question A, the man-machine dialog system of the cloud server, on the one hand, converts the question A into a question vector AE; on the other hand, the man-machine dialog system accesses a pre-established document knowledge graph according to the question vector AE, the document knowledge graph is generated based on a large amount of documents and includes a large amount of document content and knowledge data. Assuming that in this example, the man-machine dialog system compares the question vector AE with knowledge representations of a plurality of nodes in the document knowledge graph through a question-answer engine module, to find nodes that are matched. Then simply assuming there are currently 100 nodes in the document knowledge graph, and knowledge representations of 10 document nodes are all matched with the question vector AE, assuming they are respectively nodes 1-10, then the nodes 1-10 are candidate document nodes that are matched with the question vector AE.

Further, the nodes 1-10 are ranked by using the Ranker model, assuming that a ranking result in a descending order of matching degrees is 5-4-3-2-1-6-7-8-9-10, then node 5 can be determined as a target document node that is matched with the question vector AE.

For the node 5, its corresponding knowledge representation includes both feature information of document content corresponding to the node and a hierarchical structure chain corresponding to the node, i.e., information of a hierarchical structure in the document to which the node belongs. Based on this, a position of content corresponding to the node in the entire document can be accurately located; and based on the document content at that position, an answer to the question represented by the question vector can be determined.

For example, the document corresponding to the node 5 is an information introduction for the football star, the document includes: personal information, including name, height, weight, date of birth, etc.; competition information, including well-known competitions he/she participated in, performance, etc.; friend introduction, including: friend name, friend height, friend preferences, etc. If a traditional method is used, such as through a manner of keyword matching, it is highly likely that a friend's height will be matched with the height of the football star, resulting in an incorrect answer. By using the solution of the embodiments of the present application, for the height information of friends, as its hierarchical structure belongs to content of the "friend introduction" section, height information under this node will not be considered, but height information under the "personal information" section can be directly located, that is, the height information of the football star, thereby obtaining more accurate content of an answer.

But not limited to this, in a feasible manner, information of a sibling node of the target document node can also be combined, to use document content corresponding to the sibling node as context of the document content corresponding to the current node, in order to provide more accurate document content as an answer.

After obtaining the height information content in the document content corresponding to the node 5, such as "height: 195cm", an answer can be generated based on this part of content, for example, "the height of the football star XXX is 195 cm", and feedback can be provided to the user through text, voice or other easily understandable ways to the user.

In the above example, the user inputting a question through a search page is taken as an example, but not limited to this. The user can also input a question in the form of voice through a smart device, and then convert the voice question into a text question and send it to a cloud server; alternatively, after sending the voice question to the cloud server, the cloud server converts the voice question into the text question. Based on this, from the perspective of the user device side, the solution of the embodiments of the present application on the user device side can be implemented as follows: receiving a question input by a user, through an interaction interface (a man-machine interaction interface, which may be a text interaction interface or a voice interaction interface or the like); generating a question request according to the question, and sending the question request to a cloud server (the question request carrying data of the question input by the user); receiving answer content fed back from the cloud server for the question request, and exhibiting and displaying the answer content; where the answer content is generated by the could server according to a document knowledge graph and the question corresponding to the question request, as described earlier, the document knowledge graph is generated based on hierarchical structure information and content information of a plurality of documents.

For a specific implementation of the cloud server generating the answer content according to the question, reference can be made to the description in the aforementioned embodiments, which will not be repeated here.

It can be seen that, according to this embodiment, when a document-based man-machine dialog interaction is in progress, a pre-generated document knowledge graph is used. The document knowledge graph is generated based on hierarchical structure information and content information of a plurality of documents, where the structure information represents a hierarchical structure of a document. Generally, most documents have a hierarchical structure, for example, from top to down, a hierarchical structure of title-subtitle-paragraph-sentence in sequence, etc. For the document knowledge graph generated based on the hierarchical structure of documents, multi-level knowledge parsing and representation can be performed on the documents. As a result, when a subsequent determination is made based on the document knowledge graph to document content that matches the question vector, the question vector can be matched to the corresponding content of a specific document hierarchy, thereby making the obtained document content more accurate and reasonable, avoiding generation of irrelevant or incomprehensible document fragments, and improving the efficiency of man-machine dialog interaction.

### Fourth embodiment

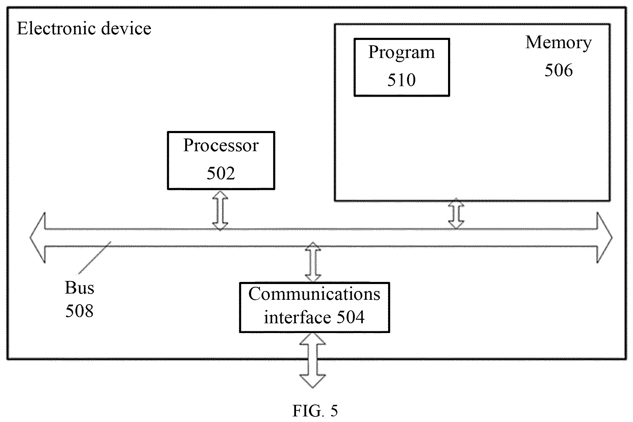

Refer to FIG. 5, a schematic structure diagram of an electronic device according to the fourth embodiment of the present application is shown. A specific implementation of the electronic device is not limited in specific embodiments of the present application. For example, it can be a server or a device in a cloud server.

As shown in FIG. 5, the electronic device may include: a processor (processor) 502, a communications interface (Communications Interface) 504, a memory (memory) 506 and a communication bus 508.

The processor 502, the communications interface 504 and the memory 506 complete communication with each other through the communication bus 508.

The communications interface 504 is configured to communicate with other electronic devices or servers.

The processor 502 is configured to execute a program 510, which can specifically execute relevant steps in any of the above method embodiments.

Specifically, the program 510 may include program codes, the program codes include computer operation instructions.

The processor 502 may be a CPU, or an application specific integrated circuit ASIC (Application Specific Integrated Circuit), or one or more integrated circuits configured to implement an embodiment of the present application. One or more processors included in a smart device may be of the same type, such as one or more CPUs, may also be different types of processors, such as one or more CPUs and one or more ASICs.

The memory 506 is configured to store the program 510. The memory 506 may include a high-speed RAM storage, or a non-volatile memory (non-volatile memory), such as at least one disk storage.

The program 510 includes at least one executable instruction, where the executable instruction can be used to cause the processor 502 to perform operations corresponding to the method described in any of the aforementioned method embodiments.

A specific implementation of a respective step in the program 510 can be found in the corresponding step(s) and unit(s) described in the above method embodiments, and has corresponding beneficial effects, which will not be repeated here. Those skilled in the art can clearly understand that, for the sake of convenience and simplicity in description, for the specific working process of the devices and modules described above, reference can be made to the description of corresponding process in the aforementioned method embodiments, which will not be repeated here.

An embodiment of the present application also provides a computer storage medium on which a computer program is stored, and when the program is executed by a processor, the method according to any of the above multiple method embodiments is implemented.

An embodiment of the present application also provides a computer program product, including computer instructions, where the computer instructions instruct a computing device to perform operations corresponding to the method according to any of the above multiple method embodiments.

In addition, it should be noted that information (including but not limited to user device information, user personal information, etc.) and data (including but not limited to sample data used for model training, data used for analysis, stored data, displayed data, etc.) related to users involved in the embodiments of the present application are information and data that have been all authorized by the users or fully authorized by all parties. And the collection, use, and processing of relevant data must comply with relevant laws, regulations, and standards of relevant countries and regions, and a corresponding operation entrance for users to choose authorization or refusal is provided.

It should be pointed out that according to needs of implementation, various components/steps described in the embodiments of the present application can be divided into more components/steps, or two or more components/steps or partial operations of components/steps can be combined into a new component/step to achieve the purpose of the embodiments of the present application.

The method described above according to the embodiments of the present application can be implemented in hardware, firmware, or implemented as software or computer codes that can be stored on a recording medium (such as CD ROM, RAM, floppy disk, hard disk, or magneto-optical disk), or as computer codes downloaded through a network and originally stored on a remote recording medium or non-transitory machine-readable medium and to be stored on a local recording medium. Therefore, the method(s) described herein can be processed by such software stored on a recording medium using a general-purpose computer, a dedicated processor, or programmable or dedicated hardware (such as ASIC or FPGA). It can be understood that computers, processors, microprocessor controllers, or programmable hardware include storage components (such as RAM, ROM, flash memory, etc.) that can store or receive software or computer codes. When the software or computer codes are accessed and executed by a computer, a processor, or hardware, the method(s) described herein is/are implemented. In addition, when the general-purpose computer accesses the code(s) used to implement the method(s) shown herein, the execution of the code(s) transforms the general-purpose computer into a dedicated computer used for executing the method(s) shown herein.

Those ordinarily skilled in the art can realize that the units and method steps of a respective example described in combination with the embodiments disclosed herein may be implemented through electronic hardware, or a combination of computer software and electronic hardware. Whether these functions are executed in hardware or software depends on the specific application and design constraint conditions of the technical solution. Those professional skilled can use different methods to achieve the described functions for each specific application, but such implementation should not be considered as going beyond the scope of the embodiments of the present application.

The above embodiments are only used to illustrate the embodiments of the present application and are not intended to limit the embodiments of the present application. Those ordinarily skilled in the relevant art may make various changes and modifications without departing from the spirit and scope of the embodiments of the present application. Therefore, all equivalent technical solutions also belong to the scope of the embodiments of the present application, and the patent protection scope of the embodiments of the present application should be limited by the claims.

## Claims

1. A man-machine dialog method, comprising:
obtaining a question vector corresponding to a question;
determining, from a plurality of document nodes, a target document node that is matched with the question vector, according to feature representations corresponding to the plurality of document nodes in a pre-generated document knowledge graph, wherein the document knowledge graph is generated based on hierarchical structure information and content information of a plurality of documents; and
generating an answer for the question according to node content corresponding to the target document node that is matched with the question vector.

2. The method according to claim 1, wherein the determining, from the plurality of document nodes, the target document node that is matched with the question vector, according to the feature representations corresponding to the plurality of document nodes in the pre-generated document knowledge graph comprises:
determining, from the plurality of document nodes, the target document node that is matched with the question vector, according to document representations or knowledge representations corresponding to the plurality of document nodes in the pre-generated document knowledge graph;
wherein the document representation is used to represent a semantic feature of document entire content that corresponds to a document node and carries hierarchical structure information of a document; the knowledge representation is used to represent a semantic feature corresponding to document content that corresponds to a document node and carries hierarchical structure chain information of a node.

3. The method according to claim 1 or 2, wherein the determining, from the plurality of document nodes, the target document node that is matched with the question vector comprises:
determining, from the plurality of document nodes, a plurality of candidate document nodes that are matched with the question vector;
ranking the plurality of candidate document nodes with use of a ranking model, and according to a ranking result, selecting from the plurality of candidate document nodes a document node that meets a preset condition as the target document node that is matched with the question vector.

4. The method according to claim 1 or 2, wherein the document knowledge graph is pre-generated by means of:
acquiring hierarchical structure information of a document;
acquiring a document data unit corresponding to a node in at least part of hierarchies according to the hierarchical structure information;
constructing and generating the corresponding document knowledge graph according to the node and the document data unit corresponding to the node.

5. The method according to claim 4, wherein:
the acquiring the document data unit corresponding to the node in the at least part of hierarchies according to the hierarchical structure information comprises: obtaining a hierarchical structure chain of the node in the at least part of hierarchies and document content corresponding to the node according to the hierarchical structure information; and obtaining the document data unit corresponding to the node in the at least part of hierarchies according to a parsing result acquired from parsing the document content of the node in terms of a pre-set type of data unit;
the constructing and the generating the corresponding document knowledge graph according to the node and the document data unit corresponding to the node comprise: mounting the document data unit corresponding to the node into the node, to generate the document knowledge graph according to the node subjected to the mounting and the hierarchical structure chain corresponding to the node.

6. The method according to claim 5, wherein the pre-set type of data unit comprises at least one of followings: a triple data unit corresponding to the document content, a question-answer pair data unit corresponding to the document content, or a data unit of the document content and key information corresponding to the document content.

7. The method according to claim 5, wherein the mounting the document data unit corresponding to the node into the node, to generate the document knowledge graph according to the node subjected to the mounting and the hierarchical structure chain corresponding to the node comprises:
generating a corresponding node vector and correspondingly storing the corresponding node vector into a node in a respective hierarchy according to a hierarchical structure chain and original node content corresponding to the node in the respective hierarchy, to generate new node content; and
generating the document knowledge graph according to the node in the respective hierarchy and the new node content of the node in the respective hierarchy.

8. A training method of a pre-trained language model, comprising:
acquiring a training sample set, wherein the training sample set comprises different types of training samples that are used to perform training on the pre-trained language model for different tasks; and
performing multi-task joint training on the pre-trained language model based on the different types of training samples, to obtain a model that is capable of outputting data used for generating a document data unit, wherein the document data unit is used to construct a document knowledge graph with hierarchical structure information.

9. The method according to claim 8, wherein the different types of training samples comprise part of or all of: a training sample of a text-triple type, a training sample of an answer-question type, a training sample of a text-abstract type, or a training sample of a text-title type.

10. A man-machine dialog method, comprising:
receiving, through an interaction interface, a question input by a user, generating a question request according to the question and sending the question request to a could server; and
receiving answer content fed back from the cloud server for the question request, and exhibiting and displaying the answer content; wherein the answer content is generated by the could server according to a document knowledge graph and the question corresponding to the question request, the document knowledge graph is generated based on hierarchical structure information and content information of a plurality of documents.

11. A man-machine dialog system, comprising: a question-answer engine module and a document knowledge graph module;
wherein the question-answer engine module is configured to: convert a question of a user into a corresponding question vector; and compare the question vector with feature representations corresponding to a plurality of document nodes in a document knowledge graph stored by the document knowledge graph module, to determine, from the plurality of the document nodes, a target document node that is matched with the question vector, wherein the document knowledge graph is generated based on hierarchical structure information and content information of a plurality of documents; and generate an answer for the question according to node content corresponding to the target document node that is matched with the question vector;
the document knowledge graph module is configured to: store the document knowledge graph, and provide access to the document knowledge graph.

12. The system according to claim 11, wherein the question-answer engine module compares the question vector with document representations or knowledge representations corresponding to the plurality of document nodes in the document knowledge graph stored by the document knowledge graph module, to determine, from the plurality of the document nodes, the target document node that is matched with the question vector; wherein the document representation is used to represent a semantic feature of document entire content that corresponds to a document node and carries hierarchical structure information of a document; the knowledge representation is used to represent a semantic feature corresponding to document content that corresponds to a document node and carries hierarchical structure chain information of a node.

13. The system according to claim 11 or 12, further comprising: a pre-trained module, wherein the pre-trained module is configured to perform multi-task joint pre-training on a pre-trained language model based on a training sample, to obtain a model that is capable of outputting a parsing result of a pre-set type of data unit corresponding to the training sample;
the document knowledge graph module is further configured to acquire hierarchical structure information of a document; obtain a hierarchical structure chain and document content corresponding to a respective hierarchy according to the hierarchical structure information; parse the document content of the respective hierarchy in terms of the pre-set type of data unit through a pre-trained language model that is trained by the pre-trained module, and obtain a document data unit corresponding to at least part of hierarchies in respective hierarchies according to the parsing result; and construct and generate the corresponding document knowledge graph according to the document data unit.

14. An electronic device, comprising: a processor, a memory, a communications interface and a communication bus, wherein the processor, the memory and the communications interface complete communication with each other through the communication bus;
the memory is configured to store at least one executable instruction, and the executable instruction enables the processor to execute operations corresponding to the method according to any one of claims 1 to 10.
